Europäisches Patentamt

(19) European Patent Office

Office européen des brevets

(11) Publication number: **0 162 594**
**B1**

(12) **EUROPEAN PATENT SPECIFICATION**

(45) Date of publication of patent specification: **31.01.90**

(21) Application number: **85302859.5**

(22) Date of filing: **24.04.85**

(60) Divisional application **88115599** filed on **22.09.88.**

(51) Int. Cl.⁵: **B 29 C 41/22, B 29 C 41/04**

(54) The manufacture of multi-colour plastic shells.

(30) Priority: **25.05.84 US 614004**

(43) Date of publication of application:
**27.11.85 Bulletin 85/48**

(45) Publication of the grant of the patent:
**31.01.90 Bulletin 90/05**

(84) Designated Contracting States:
**DE FR GB IT SE**

(56) References cited:
**FR-A-1 560 675**
**FR-A-1 605 464**
**FR-A-2 295 822**
**FR-A-2 378 626**
**GB-A- 968 760**
**GB-A-1 174 559**
**US-A-2 652 592**
**US-A-3 414 642**

(73) Proprietor: **DAVIDSON TEXTRON INC**
**Industrial Park**
**Dover New Hampshire 03820 (US)**

(72) Inventor: **Gray, John D.**
**Middleton Road**
**New Durham New Hampshire, 03855 (US)**

(74) Representative: **Hartley, David et al**
**Withers & Rogers 4 Dyer's Buildings Holborn**
**London, EC1N 2JT (GB)**

Courier Press, Leamington Spa, England.

## Description

This invention pertains to an improved plastic shell of two or more tone colours and a method and apparatus for making such articles, and to vehicle door panels incorporating such shells.

The automotive industry has turned to the use of interior trim components such as door panels comprising a polyvinyl chloride shell. See, for example, the trim components disclosed in U.S. Patent No. 3,123,403. The acceptance of such components has been because *inter alia* this type of construction permits a wide latitude in styling and colour, and grain effects which are most desired particularly in the interior design of automobiles.

The current state of the art includes a preformed grained vinyl shell made from dry thermoplastic powder particles which are applied to a heated shell mount from a powder box to form a continuous monochromatic one-piece shell.

In order to enhance the interior decor of an automobile, interior door panels and other parts have been prepared which include two separate plastic shell sections formed from different coloured plastic joined at a connection joint.

The use of multi-colour plastic is also known in the manufacture of coloured filaments. Such manufacture includes use of compartmented spinning head for making two-coloured yarn as disclosed in US 3.049.397.

Apparatus and method for multiple coloured thermoplastic floor materials are set forth in US 3,383,442.

FR 1,560,675 discloses a process for moulding a single-piece plastic shell comprising the steps of:

1) heating an open-ended mould to a temperature near the fusing temperature of a thermoplastic powder material;

2) connecting powder charge box means to the mould to form a closed system including thermoplastic powder material, the orientation of the powder charge box means and mould being such that said thermoplastic powder material is prevented from falling onto a cashing surface of the mould;

3) thereafter rotating the charge box means and mould in a powder casting sequence to allow said thermoplastic powder material to fall onto a heated casting surface of the mould and flow to form a moulded plastic shell.

In one aspect, the invention provides such a process, characterised in that mould divider means separates the mould into at least two casting surfaces, thermoplastic powder material of one colour is cast onto one of said casting surfaces and thermoplastic powder material of another colour is cast onto another of said casting surfaces whereby adjacent differently coloured portions of cast thermoplastic material are defined by said mould divider means, and thermoplastic material is caused to flow in a controlled manner from at least one of said portions across said mould divider means to form an integral joint between the plastic cast on the separated casting surfaces.

FR 1,560,675 also discloses apparatus for moulding a single-piece plastics shell comprising an open-ended mould, charge box means, means for joining the open-ended mould to the mouth of the charge box means to form a closed system adapted to deposit by gravity thermoplastic powder material onto a heated casting surface of the mould when rotated, and means for rotating the joined mould and charge box means to deposit said thermoplastic powder material onto said heated casting surface.

In another aspect, the invention provides such apparatus, characterised by mould rib divider which separates the mould into at least two casting surfaces, a divider wall in said charge box means which separates said charge box means into at least two compartments adapted to contain respective charges of thermoplastic powder material, said divider wall and mould divider rib being mutually aligned when the mould and charge box means are joined together and flow control means cooperating with said divider rib and divider wall for allowing hot thermoplastic material cast on one of said casting surfaces to flow across said mould divider rib to form an integral joint with the plastic cast on another of said casting surfaces.

FR—A—2,295,822 discloses a one-piece integrally cast plastic shell comprising first and second adjacent shell segments of respective first and second different colours having an integral joint at their common boundary.

In another aspect, the invention provides such a shell, characterised in that said common boundary lies in a groove on a moulded side of said shell and is aligned with a projection on the opposite side of said shell.

The shell may optionally be backed with a layer of reaction injection mould material of reinforced reaction injection mould material of urethane composition.

Further preferred features are defined in the dependent claims.

A more complete understanding of the invention will be apparent to those skilled in the art from the detailed description by way of example, of various embodiments of the invention. In the accompanying drawings:

Figure 1 is a schematic view of a single-piece multi-colour panel shown with associated components parts of an automotive vehicle door panel;

Figure 2 is a diagrammatic sectional view of a mould component;

Figure 3 is a diagrammatic sectional view of a powder box sealed to the mould of Figure 2 in a pre-release position;

Figure 4 is a sectional view similar to Figure 3 showing the powder box and mould in a powder release orientation;

Figure 5 is a fragmentary, enlarged sectional view of a V-type joint for forming an integral joint between the different colour panels of a multi-colour single-piece shell;

Figure 6 is a fragmentary, enlarged sectional view of a metering plate joint to form an integral joint in a multi-coloured single piece part;

Figure 8 is a fragmentary, enlarged sectional view of another embodiment of metering plate joint of Figure 7;

Figure 9 illustrates the sequence of steps in a second process according to the present invention;

Figure 10 illustrates the sequence of steps in another process according to the present invention;

Figure 11 is an enlarged, fragmentury sectional view of the joint configuration of a shell formed by the V-joint of Figure 5; and

Figure 12 is an enlarged, fragmentary sectional view of the joint configuration of a shell formed by the V-joint of Figure 6.

The process, apparatus and article of the present invention will be with reference to the production of plastic thin-walled shells for a typical automotive part such as an interior door panel, consoles and instrument panels.

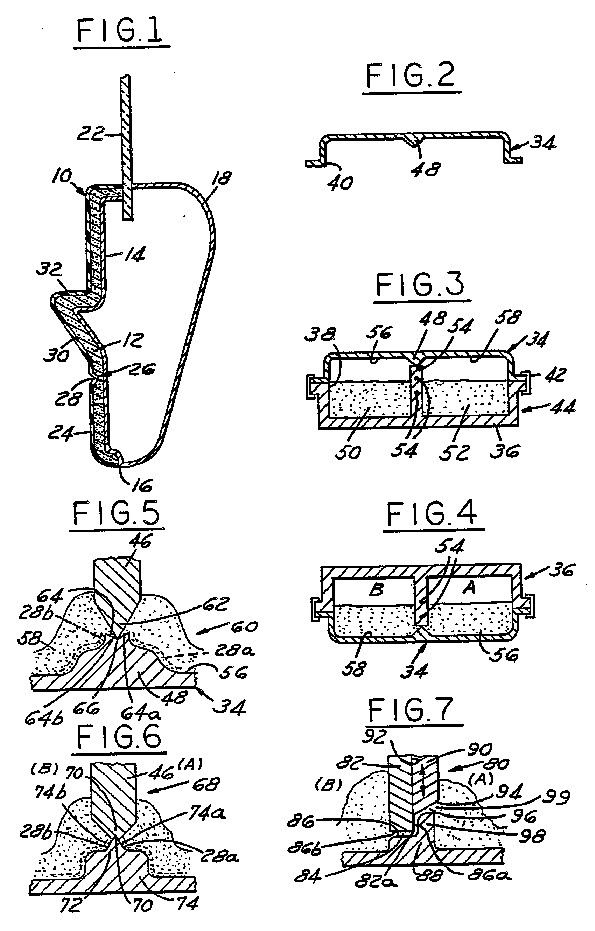

Figure 1 shows a typical automobile door panel application of a multi-colour, single-piece interior plastic shell 10. The shell 10, preferably made of polyvinyl chloride material, is backed by a layer of polyurethane foam 12 bonded to the shell 10 by a mould process such as in USPN 3,123,403, issued March 3, 1964 for Automobile Arm Rest. An interior reinforcing insert 14 is connected at a joint 16 to an outer door shell 18 to form an interior space 20 for window lift mechanism (not illustrated) to raise and lower a window 22.

The shell 10 is a one-piece plastic part with an integral lower panel 24 of a drycast plastic having a first colour, and includes an integral joint 26 which is at the base of a recessed groove 28. The groove 28 forms a transition to an integrally formed upper panel 30 including an armrest segment 32 formed of drycast plastic having a second colour contrasting or complementing the colour of the first panel 24 or other interior components. For example, the upper panel can be red, blue, yellow or beige to contrast with or complement the interior colour of seats, headliners, crashpads and the like. The lower panel 24 can be coloured a deeper complementary tone colour of a character which has a low impact or scuff display character.

Referring to Figures 2—4, a powder moulding process line is schematically shown as including selectively heated mould 34. A powder box 36 is operated between raised and lowered positions with respect to the mould 34 by suitable handling equipment, one type of which is specifically set forth in co-pending USSN 500,760 filed June 3, 1983 for Mould Loading Method and Apparatus.

The box 36 further includes an upper open end 38 which is configured to cover the planar extent of an opening 40 to mould 34.

Clamp means 42 join and seal the powder charge box 36 to mould 34 when the box 36 is elevated to the position shown in Figure 3, hereinafter referred to as the "mould-up" position.

As a result, the interior of box 36 and the interior of mould 34 form a closed system 44 having powder charges in the box 36.

In accordance with the process and apparatus of the present invention, the box 36 is provided with a divider 46 and the mould 34 has a joint-forming rib 48 that contact each other when the box and mould are joined.

The divider 46 and rib 48 form two separate compartments 50, 52 each containing a charge of plastic powder material of a different colour (Colour A in 50, Colour B in 52).

The next process step includes concurrent rotation of the closed system 44 about axis 54 defined by trunnions means of the type set forth in co-pending USSN 500,760 through 180° relative to the Figure 3 position.

At Figure 4 a fill step of the process takes place in which thermoplastic powder is distributed evenly throughout the mould opening 40. A resultant even build-up of plastic powder occurs on pre-heated surfaces 56, 58 of the mould 34. The inverted mould position shown in Figure 4 will hereinafter be referred to as the "mould-down" position.

Following the fill step, the joined mould 34 and charge box 36 are again rotated 180° so that the mould 34 is located vertically above the box 36 in the mould-up position.

An air-jet system of the type shown in the co-pending USSN 500,760 may be used to dislodge excess powder from the walls of the mould so that the dislodged material will flow by gravity return to the interior of the box for collection and reuse in the system.

A powder fuse cycle is then carried out in accordance with known practice wherein the moulded powder is completely fused into the desired thin-walled hollow part. Before the fuse cycle the charge box is unclamped from the inverted mould 34 and the box 36 is returned to a powder make-up position. Thereafter the mould 34 (with the powder cast to the surface) is heated further to fuse the powder, then is cooled and rotated 180° into a strip position corresponding to the mould-down position. Make-up powder of appropriate colour is fed to the multiple separate colour compartments.

In the embodiment of Figure 5 a V-type joint 60 is shown. The joint 60 is defined by a V-shaped tip 62 on the divider 46 which is seated in a concave surface 64 on a joint-forming rib 66 (corresponding to rib 48 of mould 34) when the box 36 and mould 34 are joined as shown in Figure 3. The joint 60 is illustrated in the position which is assumed in the fill step of Figure 4. The Colour A powder is cast on surface 56 and the Colour B powder is cast on surface 58. Colour A powder fills region 64a between tip 62 and concave surface 64 and Colour B powder fills region 64b between tip 62 and concave surface 64 and a build-up of powder of different colours adheres to the mould along a joint line defined by the sharp edge 66 of tip 62.

Once the powder is cast and adhered to the heated mould surface the system is rotated back to the position shown in Figure 3. Excess powder returns to the separate mould colour compartments 50, 52 and the powder box is removed. The mould 34 remains in its mould-up position during a first cure stage. Then the mould 34 is rotated to the mould-down position to cause the partially cured plastic in regions 64a and 64b to join at the center of concavity 66.

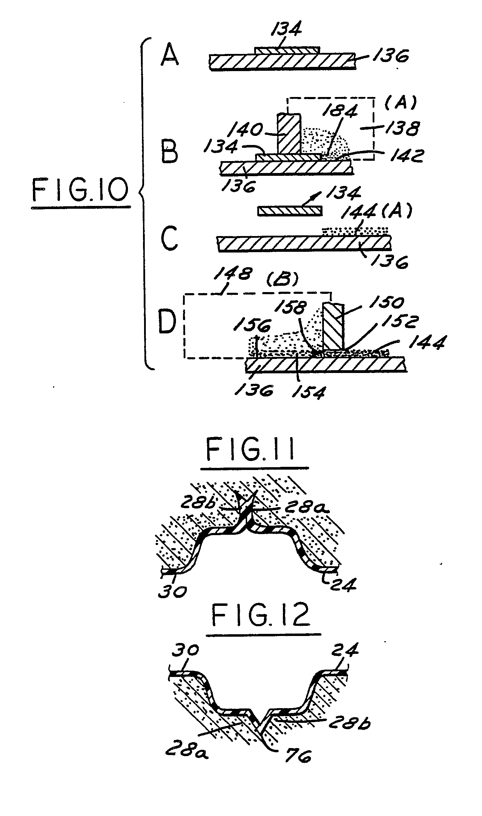

In the embodiment of Figure 6 a reverse V-joint 68 is illustrated. It includes a V groove 70 in the divider 46 and a mating V tip 72 on a rib 74 corresponding to rib 48. The powder colour separation function is the same. The process is the same as set forth in the joint of Figure 5. In this embodiment, regions 74a and 74b are partially filled with the cast material of colours A and B, respectively. When the mould is separated and positioned in the mould-up position at the final cure stage the cast powder colours A and B melt and flow along the inverted tip 72 to form a joint at a welt 76 as shown in Figure 12.

Another joint configuration 80 for practicing the process of the present invention is set forth in Figure 7. The divider 46 is formed with a fixed partition 82 having a gauged clearance 84 with the inside shell mould surface 86 on a rib 88 corresponding to rib 48. A metering plate 90 is slidably mounted on one side 92 of fixed partition 82 and includes an end surface 94 inclined with respect to side 92 to establish an adjustable metering passage 96 between plate 90 and a rib extension 98 of greater height than that of ledge 86. Before the mould powder box assembly of Fig. 3 is inverted to the position of Fig. 4, metering plate 90 is adjusted to bring surface 94 against rib extension 98 to seal off metering passage 96. When the mould and box are in a fill position powder colour B flows into region 86b and powder colour A flows into region 99. Then metering plate 90 is adjusted to allow powder colour A to drop into region 86a. The resultant transition joint of the de-moulded shell will be in the form of a protrudent line on the single-piece two-colour part.

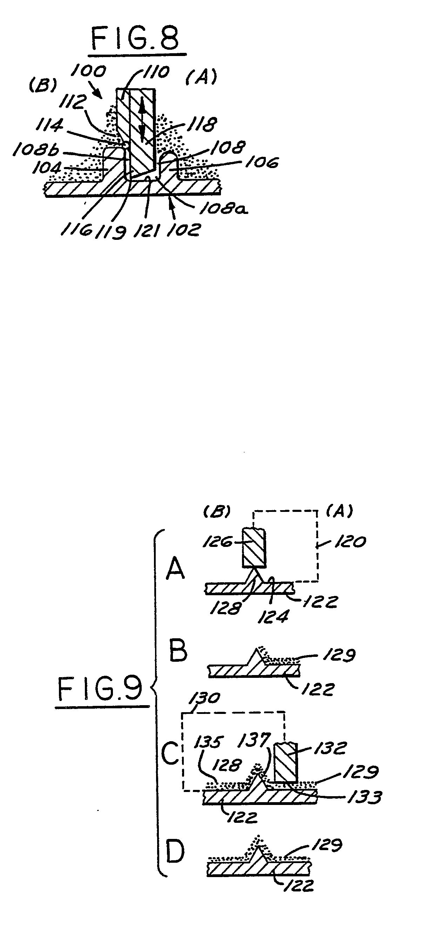

Figure 8 shows a second embodiment of a metering plate joint 100. It includes a mould 102 with two spaced ribs 104, 106 defining a space 108 therebetween. In this embodiment a movable partition 110 has an inclined end surface 112 with a gasket 114 that seals rib extension 104. The tip 116 of a plate 118 is angled to limit powder flow at a shut-off point 119 formed between the plate 118 and the floor 121 between ribs 104 and 106.

During the fill stage flow of powder A occurs through space 108 to partially fill region 108(a). The movable partition 110 and gasket 114 are then moved from the rib extension 104 to allow powder B to flow to the joint line by filling region 108b. Following the powder flow steps the mould and box are returned to a position where the mould is in its mould-up position. The box is removed and the cast material is cured on the heated mould surfaces with the mould in the mould-down position to form an integral joint between the two colour panels.

The Figure 9 process sequence includes the steps of attaching and sealing a first colour A powder box 120 (shown in dotted lines with a fragmentary sectioned wall) to a mould 122 to cover only mould surface 124 with one colour of powder by use of a box partition 126 engaging a mould rib 128 during a first fill phase as shown in Figure 9A. The mould and powder box are then rotated to the dump position, excess material is dislodged and the powder box 120 is separated from the mould 122. The cast colour A on mould 122 is shown at 129 in Figure 9B.

A second colour box 130 is then attached to the mould 122 and sealed by a partition 132 offset from rib 128 as shown and wherein the end 133 of partition 132 mates to the previously cast colour layer 129 on surface 124. Then the parts assume the fill or mould-down position and powder layer 135 of a second colour overlaps Colour A of region 137 as shown in Figure 9C to form an integral joint between the two colours.

The mould and powder box are rotated to the dump position, excess material is dislodged and the colour box 130 is separated from mould 122. The curing cycle is completed in the mould-up position to form the one-piece, two-colour skin shown with the mould in Fig. 9D.

Another process embodiment is illustrated in Figures 10A—10D. The first step, shown in Figure 10A, includes application of a masking strip 134 on a mould 136. Step two, shown in Figure 10B, includes attaching colour A powder box 138 to the mould with partition 140 sealed against strip 134 so that powder A is only cast against mould surface 142 during the fill phase to form a first colour layer 144 on mould surface 142.

Thereafter, box 138 and mould 136 are rotated to the mould-up, dump position and colour box 138 is detached. The mask 134 is removed. Then a colour box 148 is connected to mould 136. It has a side partition 150 with an end 152 sealed against previously cast layer 144. The fill phase shown in Figure 12D casts a second colour B layer 154 on mould surface 156 and on layer 144 at an overlap region 158 to form an integral joint in the resultant single-piece two-colour part which is cured in accordance with the process sequences previously discussed.

A typical powder casting process for a two-colour door panel includes the following sequence.

1. Preheat tool in oven to temperature between 121°C (250°F) and 199°C (390°F).

2. After mould cast temperature is reached, attach the powder box to the mould.

3. Rotate box and mould 1-1/2 turns clockwise and 1-1/2 turns counterclockwise.

4. Dwell time on top is approximately eight seconds (for additional part thickness, add dwell time).

5. Rotate 180° and unclamp.

6. Return the mould to a cure oven and heat for 2.5 min. in the mould-down position and 2.5 min. in the reverse mould-up position.

Examples of suitable mould heating processes for use with the process and apparatus of the present invention include mould temperature control by heated and cooled air or oil heating and cooling flow as set forth in USPN 4,217,325 issued August 12, 1980 to D. Colby. Suitable thermoplastic powders include plasticized polyvinyl chlorides and related vinyl resins in dry powder form for ease of gravity flow from the powder charge box 36 during both fill and return steps. Typical examples of parts, plastic materials and mould processes include the following:

Examples of parts that have been made by the PVC powder moulding process include a door panel shell having a mould volume of approximately six (6) cubic feet.

PVC resin, plasticizer, stabilizer, release agents and colour pigments are combined in a high intensity mixer to produce a dry, flowable powder of each desired colour. The process is known in the industry as dry-blending.

The various compound components may be selected as to type and ratio to provide the properties required both for the finished product and for ease of processing. Physical properties will not be too dissimilar from those obtained with liquid plastisol which is also used to manufacture similar products but has an inherent weakness for forming objectionable drips and runs when made in complex shapes.

Processing properties are such that when melting to the plastic powder occurs, densification results in exact reproduction of minute detail such as grain marks and stitches engraved in the mould surface.

Mould preheating temperature may range from 250°F to 390°F. Since the thickness of the finished product is also governed by the time the powder contacts the mould, it should be understood that simultaneous charging of the powder to the mould can be of definite advantage. Also, if certain areas of the mould can be made to have a lower pre-heated temperature than others, it will permit moulding a thinner shell in those areas, since both temperature and mould-filled time determine the final thickness of the shell. Therefore, a very flexible range, for mould-filled time, of one second to ten seconds or more has been established.

Depending on formulation, complete melting or fusion of the PVC powder can occur when mould temperatures reach 177°C (350°F) to 232°C (450°F).

After fusion, the mould is cooled to a temperature which will facilitate removal of the shell without damage.

Specifically the process and apparatus of the present invention enable even and complete distribution of thermoplastic powder material onto mould surfaces.

## Claims

1. A process for moulding a single-piece plastic shell (10) comprising the steps of:

1) heating an open-ended mould (34) to a temperature near the fusing temperature of a thermoplastic powder material;

2) connecting powder charge box means (36) to the mould to form a closed system (44) including thermoplastic powder material, the orientation of the powder charge box means and mould being such that said thermoplastic powder material is prevented from falling onto a casting surface (56, 58, 74a, 74b; 108a, 108b) of the mould;

3) thereafter rotating the charge box means and mould in a powder casting sequence to allow said thermoplastic powder material to fall onto a heated casting surface of the mould and flow to form a moulded plastic shell,

characterised in that mould divider means (46, 48; 126, 128; 124, 140, 150) separates the mould (34) into at least two casting surfaces (56, 58; 74a, 74b; 108a, 108b), thermoplastic powder material of one colour (A) is cast onto one of said casting surfaces and thermoplastic powder material of another colour (B) is cast onto another of said casting surfaces whereby adjacent differently coloured portions of cast thermoplastic material are defined by said mould divider means, and thermoplastic material is caused to flow in a controlled manner from at least one of said portions across said mould divider means to form an integral joint (76; 80) between the plastic cast on the separated casting surfaces.

2. A process as claimed in Claim 1 wherein said closed system (44) includes a divider wall (54) which cooperates with said mould divider means (46, 46; 126, 128; 124, 140, 150) to separate said differently coloured thermoplastic powder materials (A, B) an hot thermoplastic material is caused to flow between said divider wall and mould divider means to form an integral joint (76; 80) at a styling line defined by said mould divider means.

3. A process according to Claim 1 or Claim 2 wherein said mould divider means (46, 48; 126, 128; 124, 140, 150) is a ridge of generally V-shaped cross-section.

4. A process according to Claim 2 or Claim 3, comprising distributing a powder charge of one colour (A) through a flow opening into a first powder collection region (74a) at the mould divider means (88); thereafter metering flow of a second colour (B) into a second powder collection region (74b) in communication with the first powder collection region; and thereafter curing the powders collected in the first and second powder collection regions to form a joint for integrally connecting adjacent cast colour strips in the mould.

5. A process according to Claim 4, wherein the metering flow is produced by relatively moving a charge box interior portion and a metering plate (90) with respect to the mould divider means (88).

6. A process according to any one of Claims 1 to 5, wherein the connecting step includes sequential connection of a first powder box (120) in sealed relationship to the mould divider means (126, 128) to cast powder of a first colour (A) against one of the mould casting surfaces (124) followed by connecting a second powder box (130) in sealed relationship to the previously cast first colour layer (129) to cast powder of a second colour (B) against the other of the mould casting surfaces and overlapping the first cast powder colour.

7. A process according to Claim 6 comprising sealing the first box (120) to the mould (122) by a side wall (126) sealed against the mould divider means (128) during the casting of the first powder colour (A) against the one of the mould casting surfaces (124); and sealing the second box to the mould by a side wall (132) sealed against the previously cast first colour at a position offset from the mould divider means to cause the second colour (B) to cover the mould divider means (128) and a portion of the first cast colour so as to form an integral joint between adjacent cast layers of different colour on the mould.

8. A process according to any one of Claims 1 to 5 wherein the connecting step includes sequential connection of a first powder box (138) in sealed relationship to a masking strip (134) on the mould (136) to divide it into first (142) and second (156) powder casting surfaces;

distributing the powder against one of the casting surfaces to form a layer (144) of cast powder of one colour (A) on the first powder casting surface, removing the first box and the masking strip;

and sealing a second powder box (148) against the previously formed layer of cast powder at a point offset from an exposed edge of the layer; and casting a layer of powder against the second powder casting surface (156) and in overlapped relationship with the exposed edge so as to form an integral joint between the adjacent cast powder layers on the mould.

9. Apparatus for moulding a single-piece plastics shell (10) comprising an open-ended mould (34), charge box means (36), means (42) for joining the open-ended mould to the mouth of the charge box means to form a closed system (44) adapted to deposit by gravity thermoplastic powder material onto a heated casting surface (56, 58; 74a, 74b; 108a, 108b) of the mould when rotated, and means for rotating the joined mould and charge box means to deposit said thermoplastic powder material onto said heated casting surface, characterised by a mould divider rib (48; 74; 88; 104, 106; 128) which separates the mould into at least two casting surfaces (56, 58; 74a, 74b; 108a, 108b), a divider wall (54; 46; 140) in said charge box means which separates said charge box means (36) into at least two compartments (50, 52) adapted to contain respective charges of thermoplastic powder material, said divider wall and mould divider rib being mutually aligned when the mould (34) and charge box means are joined together and flow control means (90; 118) cooperating with said divider rib and divider wall for allowing hot thermoplastic material cast on one of said casting surfaces to flow across said mould divider rib to form an integral joint (76; 80) with the plastic cast on another of said casting surfaces.

10. Apparatus according to Claim 9 wherein said mould divider rib (48; 74; 88; 104, 106; 128) is of generally V-shaped cross-section and in use defines a transition line between portions of the shell formed by powder cast on said first (56, 74a, 108a) and second (58, 74b, 108b) casting surfaces.

11. Apparatus according to Claim 9 or Claim 10 further comprising a powder box divider wall (82) and a relatively movable metering plate (90); the divider wall and movable metering plate being selectively positioned with respect to the mould divider rib (88) during a fill phase when powder of different colour (B) is cast onto the separate mould casting surfaces to produce flow of one of the colours into one of the powder collection regions and to position the metering plate to produce flow of another powder colour into the other powder collection region to be joined with the other powder in the one powder region to form an integral joint between the shell segments cast one the separate mould casting surfaces.

12. Apparatus according to Claim 10 or Claim 11, wherein the mould divider rib (88) incorporates a ledge (82a) and a rib extension (98), the divider wall (82) being spaced from the ledge to define the first powder collection region;

and the metering plate (90) has an angular end surface (94) movable with respect to the rib extension to define the second powder collection region and a flow control orifice for flow of a second colour powder to the second collection region;

13. Apparatus according to Claim 10 or Claim 11 wherein the metering plate (118) having a gasket means (114) engageable with the mould rib (104) to form the first collection region (108a); the divider wall being movable and engageable with the rib and having end means (112) cooperating with the rib to form a second collection region (108b); the gasket means being operable to release powder from the first collection region to flow into contact with powder in the second collection region to form an integral joint between two separate colour shell segments cast on the mould (102).

14. A one-piece integrally cast plastic shell (10) comprising first and second adjacent shell segments (24, 30) of respective first and second different colours having an integral joint (76, 80) at their common boundary (28), characterised in that said common boundary (28) lies in a groove (28) on a moulded side of said shell and is aligned with a projection (28a, 28b) on the opposite side of said shell.

15. A door panel (Figure 1) of a vehicle comprising a one-piece integrally cast plastic shell (10) as claimed in Claim 15.

16. A door panel (Figure 1) as claimed in Claim 16 wherein said groove (28) defines a styling transition line between upper (30) and lower (24) panel portions of said shell (10).

## Patentansprüche

1. Verfahren zur Formfertigung eines einstückigen Hüllteils (10) aus Kunststoff, welches folgende Schritte aufweist:

1) Erwärmen einer Form (34) mit offenem Ende auf eine Temperatur in der Nähe der Schmelztemperatur eines thermoplastischen Pulvermaterials;

2) Verbinden einer Pulverchargen-Behältereinrichtung (36) mit der Form zur Bildung eines geschlossenen Systems (44), welches thermoplastisches Pulvermaterial einschließt, wobei die Ausrichtung der Pulverchargen-Behältereinrichtung und der Form derart ist, daß das thermoplastischen Pulvermaterial davon abgehalten ist, auf eine Gießoberfläche (56, 58, 74a, 74b; 108a, 108b) der Form zu fallen;

3) Danach Drehen der Chargen-Behältereinrichtung und der Form in einer Pulvergießsequenz, um es dem thermoplastischen Pulvermaterial zu ermöglichen, auf eine erhitzte Gießoberfläche der Form zu fallen und zur Bildung eines geformten Hüllteils aus Kunststoff zu fließen,

dadurch gekennzeichnet, daß Formteileinrichtungen (46, 48; 126, 128; 124, 140, 150) die Form (34) in wenigstens zwei Gießoberflächen (56, 58; 74a, 74b; 108a, 108b) trennen, daß thermoplastisches Pulvermaterial einer Farbe (A) auf eine der Gießoberflächen und thermoplastisches Pulvermaterial einer weiteren Farbe (B) auf eine weitere Gießoberfläche gegossen wird, wodurch benachbarte unterschiedlich gefärbte Abschnitte des gegossenen thermoplastischen Materials durch die Formteileinrichtung gebildet werden, und daß thermoplastisches Material veranlaßt wird, in gesteuerter Weise von wenigstens einem der Abschnitte quer über die Formteileinrichtungen zu fließen, um eine einstückige Verbindung (76; 80) zwischen dem Kunststoff auszubilden, der auf die getrennten Gießoberfläche gegossen wurde.

2. Verfahren nach Anspruch 1, bei welchem das geschlossene System (44) eine Teilerwand (54) aufweist, die mit den Formteileinrichtungen (46, 46; 126, 128; 124, 140, 150) zusammenwirkt, um die unterschiedlich gefärbten thermoplastischen Pulvermaterialien (A, B) zu trennen, und daß ein heißes thermoplastisches Material veranlaßt wird, zwischen der Teilerwand und den Formteilereinrichtungen zu fließen, um eine einstückige Verbindung (76; 80) an einer von der Formteilereinrichtung gebildeten Styling-linie auszubilden.

3. Verfahren nach Anspruch 1 oder Anspruch 2, bei welchem die Formteilereinrichtungen (46, 48; 126, 128; 124, 140, 150) von einem Wulst mit einem insgesamte V-förmigen Querschnitt gebildet werden.

4. Verfahren nach Anspruch 2 oder Anspruch 3, bei welchem eine Pulvercharge einer Farbe (A) durch eine Fließöffnung in einen ersten Pulversammelbereich (74a) an den Formteileinrich-

tungen (88) geschüttet wird, danach ein Strom einer zweiten Farbe (B) in einen zweiten Pulversammelbereich (74b) dosiert wird, der in Verbindung mit dem ersten Pulversammelbereich steht, und danach die in dem ersten und zweiten Pulversammelbereich gesammelten Pulver zur Bildung einer Verbindung gehärtet werden, um benachbarte gegossene Farbstreifen in der Form zu einem Stück zu verbinden.

5. Verfahren nach Anspruch 4, bei welchem der Dosierstrom durch eine Relativbewegung eines inneren Abschnitts des Chargenbehälters und einer Dosierplatte (90) bezüglich der Formteilereinrichtungen (88) erzeugt wird.

6. Verfahren nach einem der Ansprüche 1 bis 5, bei welchem der Verbindungsschritt ein sequentielles Verbinden eines ersten Pulverbehälters (120) in abgedichteter Beziehung mit den Formteilereinrichtungen (126, 128) aufweist, um Pulver einer ersten Farbe (A), gegen eine der Formgießoberflächen (124) zu gießen, worauf ein Verbinden eines zweiten Pulverbehälters (130) in abgedichteter Beziehung mit der vorher gegossenen ersten Farbschicht (129), um Pulver einer zweiten Farbe (B) gegen die andere Formgießoberfläche zu gießen, und ein Überlappen der ersten gegossenen Pulverfarbe folgt.

7. Verfahren nach Anspruch 6, bei welchem der erste Behälter (120) an der Form (122) durch eine Seitenwand (126) abgedichtet wird, die gegen die Formteilereinrichtungen (128) während des Gießens der ersten Pulverfarbe (A) gegen die eine Formgießoberfläche (124) abgedichtet ist, und der zweite Behälter an der Form durch eine Seitenwand (132) abgedichtet wird, die gegen die vorher gegossene erste Farbe an einer Stelle abgedichtet ist, die von den Formteilereinrichtungen versetzt ist, um zu veranlassen, daß die zweite Farbe (B) die Formteilereinrichtungen (128) und einen Abschnitt der ersten gegossenen Farbe bedeckt, um so eine einstückige Verbindung zwischen benachbarten Gußschichten unterschiedlicher Farbe auf der Form zu bilden.

8. Verfahren nach einem der Ansprüche 1 bis 5, bei welchem der Verbindungsschritt eine sequentielle Verbindung eines ersten Pulverbehälters (138) in abgedichteter Beziehung mit einem Maskenstreifen (134) an der Form (136), um sie in eine erste Pulvergießoberfläche (142) und eine zweite Pulvergießoberfläche (156) zu unterteilen, ein Schütten des Pulvers gegen eine der Gießoberfläche zur Bildung einer Schicht (144) eines gegossenen Pulvers einer Farbe (A) auf die erste Pulvergießoberfläche, ein Entfernen des ersten Behälters und des Maskenstreifens,

und ein Abdichten eines zweiten Pulverbehälters (148) gegen die vorher ausgebildete Schicht des gegossenen Pulvers an einer Stelle, die zu einem freiliegenden Rand der Schicht versetzt ist, und ein Gießen einer Schicht des Pulvers gegen die zweite Pulvergießoberfläche (156) und in einer überlappenden Beziehung mit dem freiliegenden Rand umfaßt, um so eine einstückige Verbindung zwischen den benachbarten gegossenen Pulverschichten auf der Form auszubilden.

9. Vorrichtung zur Formfertigung eines einstükkigen Hüllteils (10) aus Kunststoff mit einer Form (34) mit offenem Ende, mit Chargenbehältereinrichtungen (36), mit Einrichtungen (42) zum Verbinden der Form mit offenem Ende mit der Mündung der Chargenbehältereinrichtungen zur Bildung eines geschlossenen Systems (44), das zur Schwerkraftablegung von thermoplastischem Pulvermaterial auf einer beheizten Gießoberfläche (56, 58; 74a, 74b; 108a; 108b) der Form geeignet ist, wenn es gedreht wird, und mit Einrichtungen zum Drehen der Form und der Chargenbehältereinrichtungen im verbundenen Zustand, um das thermoplastische Pulvermaterial auf der erhitzten Gießoberfläche abzulegen, gekennzeichnet durch eine Formteilerrippe (48; 74; 88; 104, 106; 128), welche die Form in wenigstens zwei Gießoberflächen (56, 58; 74a, 74b; 108a, 108b) trennt, durch eine Teilerwand (54; 46; 140) in den Chargenbehältereinrichtungen, welche die Chargenbehältereinrichtungen (36) in wenigstens zwei Kammern (50, 52) trennt, die für die Aufnahme der jeweiligen Chargen von thermoplastischem Pulvermaterial geeignet sind, wobei die Teilerwand und die Formteilerrippe gegenseitig ausgerichtet sind, wenn die Form (34) und die Chargenbehältereinrichtungen miteinander verbunden sind, und durch Stromsteuereinrichtungen (90; 118), die mit der Teilerrippe und der Teilerwand zusammenwirken, um zu ermöglichen, daß heißes thermoplastisches Material, das auf eine der Gießoberflächen gegossen worden ist, über die Formteilerrippe fließt, um eine einstückige Verbindung (76; 80) mit dem Kunststoff zu bilden, der auf die andere Gießoberfläche gegossen wurde.

10. Vorrichtung nach Anspruch 9, bei welchem die Formteilerrippe (48; 74; 88; 104, 106; 128) einen insgesamt V-förmigen Querschnitt hat und beim Einsatz eine Übergangslinie zwischen Abschnitten des Hüllteils bildet, das von dem Pulver gebildet wird, das auf die erste Gießoberfläche (56, 74a; 108a) und die zweite Gießoberfläche (58, 74b; 108b) gegossen wurde.

11. Vorrichtung nach Anspruch 9 oder Anspruch 10, welche ferner eine Pulverbehälter- Teilerwand (82) und eine relativ bewegliche Dosierplatte (90) aufweist, wobei die Teilerwand und die bewegliche Dosierplatte selektiv bezüglich der Formteilerrippe (88) während einer Füllphase positioniert werden, wenn Pulver unterschiedlicher Farbe (B) auf die getrennten Formgießoberflächen gegossen wird, um einen Strom einer der Farben in einem der Pulversammelbereiche zu erzeugen und um die Dosierplatte zu positionieren, um einen Strom einer weiteren Pulverfarbe in den anderen Pulversammelbereich zu erzeugen, der mit dem anderen Pulver in dem einen Pulverbereich verbunden werden soll, um eine einstückige Verbindung zwischen den Hüllteilsegmenten zu schaffen, die auf die getrennten Formgießoberflächen gegossen wurden.

12. Vorrichtung nach Anspruch 10 oder Anspruch 11, bei welchem die Formteilerrippe (88) eine Leiste (82a) und einen Rippenansatz (98) aufweist, wobei die Teilerwand (82) von der Leiste zur Bildung des ersten Pulversammelbereichs im Abstand angeordnet ist; und bei welchem die Dosierplatte (90) eine Winkel-Stirnfläche (94) hat, die bezüglich des Rippenansatzes beweglich ist, um den zweiten Pulversammelbereich und eine Strömungssteueröffnung für den Strom eines zweiten Farbpulvers zu dem zweiten Sammelbereich zu bilden.

13. Vorrichtung nach Anspruch 10 oder Anspruch 11, bei welchem die Dosierplatte (118) eine Dichtungseinrichtung (114) aufweist, die mit der Formrippe (104) zur Bildung des ersten Sammelbereichs (108a) in Eingriff bringbar ist, die Teilerwand zu der Rippe beweglich ist und mit ihr in Eingriff bringbar ist und Stirneinrichtungen (112) aufweist, die mit der Rippe zusammenwirken, um eine zweiten Sammelbereich (108b) zu bilden, die Dichtungseinrichtung so wirkt, daß Pulver von dem ersten Sammelbereich freigegeben wird um in Kontakt mit dem Pulver in dem zweiten Sammelbereich zu fließen, um eine einstückige Verbindung zwischen den zwei getrennten Farbhüllteilsegmenten auszubilden, die auf die Form (102) gegossen wurden.

14. Einstückig gegossenes Hüllteil (10) aus Kunststoff mit einem ersten und einem zweiten angrenzenden Hüllteilsegment (24, 30) mit einer ersten bzw. einer zweiten unterschiedlichen Farbe, die eine einstückige Verbindung (76, 80) an ihrer gemeinsamen Grenze (28) haben, dadurch gekennzeichnet, daß die gemeinsame Grenze (28) in einer Nut (28) in einer ausgeformten Seite des Hüllteils liegt und fluchtend zu einem Vorsprung (28a, 28b) auf der gegenüberliegenden Seite des Hüllteils ausgerichtet ist.

15. Türfüllung (Fig. 1) eines Fahrzeugs, welche ein einstückig gegossenes Hüllteil (10) aus Kunststoff nach Anspruch (14) aufweist.

16. Türfüllung (Fig. 1) nach Anspruch 15, bei welchem die Nut (28) eine Styling-Übergangslinie zwischen einem oberen Füllungsabschnitt (30) und einem unteren Füllungsabschnitt (24) des Hüllteils (10) bildet.

**Revendications**

1. Procédé pour le moulage d'une coquille en matière plastique monobloc (10) comportant les phases qui consistent à:

1) chauffer un moule à extrémité ouverte (34) à une température voisine de la température de fusion d'un matériau pulvérulent thermoplastique;

2) connecter des moyens formant boîte pour la charge de poudre (36) au moule pour former un système fermé (44) renfermant la poudre thermoplastique, l'orientation des moyens formant boîte pour la charge de poudre et le moule étant tel que ledit matériau pulvérulent thermoplastique ne peut pas tomber sur une surface de coulage (56, 58, 74a, 74b, 108a, 108b) du moule;

3) faire tourner ensuite les moyens formant boîte pour la charge et le moule dans une séquence de coulage de la poudre pour permettre audit matériau pulvérulent thermoplastique de tomber sur une surface de coulage chauffée du moule et de s'écouler pour former une coquille de matière plastique moulée,

caractérisé en ce que des moyens formant diviseur de moule (46, 48; 126, 128; 124, 140, 150) divisent le moule (34) en au moins deux surfaces de coulage (56, 58; 74a, 74b; 108a, 108b), un matériau thermoplastique pulvérulent d'une couleur (A) est coulé sur une desdites surfaces de coulage et un matériau pulvérulent thermoplastique d'une autre couleur (B) est coulé sur une autre desdites surfaces de coulage de telle sorte que des parties adjacentes colorées différemment de matériaux thermoplastiques coulés sont définies par lesdits moyens formant diviseur de moule et le matériau thermoplastique est amené à s'écouler d'une façon contrôlée à partir d'au moins une desdites portions à travers lesdits moyens formant diviseur de moule pour constituer un joint intégré (76; 80) entre le plastique coulé sur les surfaces de coulage distinctes.

2. Procédé tel que revendiqué à la revendication 1 dans lequel ledit système fermé (44) comporte une cloison formant diviseur (54) qui coopère avec lesdits moyens diviseur du moule (44, 46; 126, 128; 124, 140, 150) pour séparer lesdits matériaux thermoplastiques pulvérulents colorés de façon différente (AB), un matériau thermoplastique chaud étant amené à s'écouler entre ladite paroi formant diviseur et les moyens formant diviseur du moule pour constituer un joint intégré (76; 80) selon une ligne de décoration définie par lesdits moyens diviseur du moule.

3. Procédé selon la revendication 1 ou la revendication 2 dans lequel lesdits moyens formant diviseur du moule (46, 48; 126, 128; 124, 140, 150) consistent en une crête de forme générale en coupe suivant un V.

4. Procédé selon la revendication 2 ou la revendication 3 qui consiste à distribuer une charge de poudre d'une couleur (A) à travers un orifice d'écoulement vers une première région de concentration de poudre (74a) au niveau des moyens diviseur du moule (88); et ensuite à mesurer l'écoulement d'une seconde couleur (B) vers un second emplacement de concentration de poudre (74b) en communication avec la première région de concentration de poudre; et ensuite à réaliser le durcissement des poudres concentrées dans les première et seconde régions de concentration de poudre pour constituer un joint destiné à relier de façon monobloc des bandes de couleur coulées dans le moule.

5. Procédé selon la revendication 4 dans lequel le flux mesuré est produit en déplaçant relativement une partie intérieure d'une boîte contenant la charge et une plaque de mesurage (90) par rapport aux moyens diviseur du moule (88).

6. Procédé selon l'une quelconque des revendications 1 à 5 dans lequel l'étape consistant à réaliser la connexion comporte la connexion séquentielle d'une première boîte de poudre (120) reliée de façon étanche auxdits moyens formant diviseur du moule (126, 128) pour assurer le coulage de la poudre d'une première couleur (A) contre l'une des surfaces de coulage du moule (124) laquelle est suivie de la connexion d'une seconde boîte de poudre (130) en relation étanche avec la première couche de couleur préalablement coulée (129) de façon à faire couler la poudre d'une seconde couleur (B) contre l'autre des surfaces de coulage du moule et réaliser la superposition avec la première couleur de poudre coulée.

7. Procédé selon la revendication 6 comprenant la phase qui consiste à assurer l'étanchéité de la première boîte (120) par rapport au moule (122) par une cloison latérale (126) étanche par rapport aux moyens formant diviseur du moule (128) lors du coulage de la première couleur de poudre (A) contre l'une des surfaces de coulage du moule (124); et à réaliser l'étanchéité de la seconde boîte par rapport au moule au moyen d'une cloison latérale (132) étanche contre la première couleur préalablement coulée avec une position décalée par rapport aux moyens formant diviseur du moule pour provoquer le recouvrement par la seconde couleur (B) des moyens formant diviseur du moule (128) et une partie de la première couleur coulée de façon à constituer un joint intégré entre les couches coulées adjacentes de différentes couleurs sur le moule.

8. Procédé selon l'une quelconque des revendications 1 à 5 dans lequel la phase de connexion comporte une connexion séquentielle d'une première boîte de poudre (138) reliée de façon étanche à une bande de masquage (134) sur le moule (136) pour diviser celui-ci en une première (142) et une seconde (156) surfaces de coulage de poudre; à distribuer la poudre contre l'une des surfaces de coulage pour former une couche (144) de poudre coulée d'une couleur (A) sur la première surface de coulage de poudre et enfin à retirer la première boîte et la bande de masquage;

et à rendre étanche la connexion entre une seconde boîte de poudre (148) par rapport à la couche formée préalablement de poudre coulée en un point décalé par rapport au bord exposé de la couche; et à couler une couche de poudre contre la seconde surface de coulage de poudre (156) et en liaison avec recouvrement avec le bord exposé de façon à constituer un joint intégré entre les couches de poudre coulées adjacentes sur le moule.

9. Appareil pour le moulage d'une coquille monobloc en matière plastique (10) qui comporte un moule à extrémité ouverte (34), des moyens formant boîte de charge (36), des moyens (42) pour relier le moule à extrémité ouverte à l'embouchure des moyens formant boître de charge pour constituer un système fermé (44) adapté pour déposer par gravité un matériau thermoplastique pulvérulent sur une surface de coulage chauffée (56, 58; 74a, 74b; 108a; 108b) du moule lorsque celui-ci tourne, et des moyens pour faire tourner le moule et les moyens formant boîte de charge pour déposer ledit matériau thermoplastique pulvérulent sur ladite surface de coulage chauffée, caractérisé par une nervure de diviseur de moule (48; 74; 88; 104, 106; 128) qui sépare le moule en au moins deux surfaces de coulage (56, 58; 74a, 74b; 108a, 108b), une cloison formant diviseur (54; 46; 140) dans lesdits moyens formant boîte de charge qui sépare lesdits moyens formant boîte de charge (36) en au moins deux compartiments (50, 52) susceptibles de renfermer des charges correspondantes de matériaux pulvérulents thermoplastiques, ladite cloison formant diviseur et la nervure diviseur de moule étant en alignement lorsque le moule (34) et les moyens formant boîte de charge sont reliés les uns aux autres et des moyens de contrôle d'écoulement (90; 118) coopérant avec ladite nervure formant diviseur et la cloison formant diviseur pour permettre au matériau thermoplastique chaud coulé sur l'une desdites surfaces de coulage de s'écouler à travers ladite nervure diviseur de moule pour former un joint intégré (76; 80) avec le matériau plastique coulé sur une desdites surfaces de coulage.

10. Appareil selon la revendication 9 dans lequel ladite nervure divisant le moule (48; 74; 88; 104, 106; 128) est de forme générale en V en coupe et lors de son utilisation définit une ligne de transition entre des parties de la coquille formée par la poudre coulée sur ladite première (56, 74a, 108a) et ladite seconde (58, 74b, 108b) surfaces de coulage.

11. Appareil selon la revendication 9 ou la revendication 10 comprenant en outre une cloison formant diviseur de boîte de poudre (82) et une plaque de mesurage (90) susceptible d'être déplacée relativement; la cloison formant diviseur et la plaque de mesurage mobile étant positionnées de façon sélective par rapport à la nervure formant diviseur de moule (88) au cours d'une phase de remplissage quand la poudre de couleur différente (B) est coulée sur des surfaces de coulage distinctes du moule pour produire un écoulement d'une des couleurs vers l'une des régions de concentration de poudre et pour positionner la plaque de mesurage de façon à produire un écoulement d'une autre couleur de poudre vers l'autre région de concentration de poudre qu'il y a lieu de relier avec l'autre poudre dans la première région de poudre pour former un joint intégré entre les segments de coquille coulés sur les surfaces distinctes de coulage du moule.

12. Appareil selon la revendication 10 ou la revendication 11, dans lequel la nervure formant diviseur de moule (88) comporte une saillie (82a) et un prolongement formant nervure (98), la cloison formant diviseur (82) étant espacée par rapport à la saillie pour définir la première région de concentration de poudre;

et la plaque de mesurage (90) a une surface d'extrémité angulaire (94) qui est susceptible de se déplacer par rapport au prolongement formant nervure pour définir la deuxème région de concentration de poudre et un orifice de contrôle d'écoulement pour permettre l'écoulement d'une seconde poudre de couleur vers la seconde région de concentration.

13. Appareil selon la revendication 10 ou la revendication 11 dans lequel la plaque de mesurage (118) comportant des moyens formant joint (114) susceptibles de coopérer avec la nervure du moule (104) pour constituer la première région de concentration (108a); la cloison formant diviseur étant susceptible de se déplacer et de coopérer avec la nervure et ayant des moyens d'extrémité (112) qui coopèrent avec la nervure pour constituer une seconde région de concentration (108b); les moyens formant joint étant susceptibles de fonctionner pour libérer de la poudre à partir de la première région de concentration de façon à ce qu'elle s'écoule pour venir en contact avec la poudre qui se trouve dans la seconde région de concentration pour constituer un joint intégré entre deux segments de coquille de couleurs distinctes coulés sur le moule (102).

14. Coquille (10) de matière plastique moulée en une seule pièce comprenant des premier et second segments de coquille adjacents (24, 30) de première et seconde couleurs différentes correspondantes comportant un joint intégré (76, 80) à l'emplacement de leur frontière commune (28), caractérisée en ce que ladite frontière commune (28) se trouve disposée dans une rainure (28) sur un côté moulé de ladite coquille et se trouve en alignement avec une saillie (28a, 28b) sur le côté opposé de ladite coquille.

15. Panneau de porte (figure 1) pour un véhicule comprenant une coquille en matière plastique moulée en une seule pièce telle que revendiqué dans la revendication 15.

16. Panneau de porte (figure 1) tel que revendiqué à la revendication 16 dans lequel ladite rainure (28) définit une ligne de transition décorative entre les parties supérieure (30) et inférieure (24) du panneau de ladite coquille (10).

EP 0 162 594 B1

FIG.1

FIG.2

FIG.3

FIG.5

FIG.4

FIG.6

FIG.7

# FIG. 8

# FIG. 9

FIG.10

A

134

136

B

(A)
184
140    138
134
142
136

C

134
144 (A)

136

D

148 (B)
158    150
156    152
144

136  154

FIG.11

28b    28a

30    24

FIG.12

30    24

28b
28a    76